(19) Europäisches Patentamt
European Patent Office
Office européen des brevets

(11) **EP 2 905 131 A1**

(12) **EUROPEAN PATENT APPLICATION**
published in accordance with Art. 153(4) EPC

(43) Date of publication:
**12.08.2015 Bulletin 2015/33**

(51) Int Cl.:
**B32B 27/00** (2006.01)   **G02F 1/1335** (2006.01)

(21) Application number: **13843883.3**

(22) Date of filing: **27.09.2013**

(86) International application number:
**PCT/JP2013/076185**

(87) International publication number:
**WO 2014/054508 (10.04.2014 Gazette 2014/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.10.2012 JP 2012220066**

(71) Applicant: **Fujifilm Corporation**
**Minato-ku**
**Tokyo 106-8620 (JP)**

(72) Inventors:
• **HOSODA Hidemasa**
**Fujinomiya-shi**
**Shizuoka 418-8666 (JP)**
• **NOMURA Tatsuya**
**Fujinomiya-shi**
**Shizuoka 418-8666 (JP)**
• **ITO Koreshige**
**Fujinomiya-shi**
**Shizuoka 418-8666 (JP)**

(74) Representative: **Hoffmann Eitle**
**Patent- und Rechtsanwälte PartmbB**
**Arabellastraße 30**
**81925 München (DE)**

(54) **MULTILAYER FILM, OPTICAL MULTILAYER FILM, AND DISPLAY DEVICE**

(57)   This invention aims to provide a laminated film that suppresses generation of iridescent unevenness and suppresses decrease of the luminance in which the surface irregularity is controlled to the prescribed range. This invention relates to a laminated film containing a support and a backcoat film on the support, wherein the backcoat film contains a silicon-containing resin, a matting agent and a surfactant; the silicon-containing resin contains a condensate of a silane coupling agent; the silane coupling agent contains a tetrafunctional alkoxysilane and a trifunctional or bifunctional alkoxysilane; a molar ratio of the tetrafunctional alkoxysilane and the trifunctional or bifunctional alkoxysilane is from 25/75 to 85/15; a volume average particle diameter r of the matting agent and an average thickness t of the backcoat film satisfies the relationship t < r; and a content of inorganic fine particles in the backcoat film is 20% or less.

Fig. 1

**Description**

Technical Field

The present invention relates to a laminated film, an optical laminated film and a display device. Particularly, the invention relates to a laminated film that is favorably used as a component of a backlight unit of a liquid crystal display, an optical laminated film containing the laminated film, and a display device equipped with the optical laminated film.

Background Art

An optical laminated film having a prism sheet, a lens sheet, a diffusion sheet and the like is being widely used as a constitutional component of a backlight unit of a liquid crystal display device (such as a television set and a monitor) . An optical laminated film contains many sheets including a prism sheet or a lens sheet that refracts incident light to a prescribed direction, a diffusion sheet that diffuses incident light by refracting variously, and the like. For example, Patent Reference 1 describes a backlight unit for a liquid crystal display device constituted by a diffusion sheet, a prism sheet, a lens sheet and the like that are laminated between a liquid crystal display panel and a light guide plate. In Patent Reference 1, an upper diffusion sheet and a lower diffusion sheet are disposed on an upper surface and a lower surface of a lens sheet, respectively.

As described above, an optical laminated film containing many sheets laminated on each other has been used in a backlight unit of a liquid crystal display device. In recent years, however, it is considered that the number of the laminated sheets is decreased for reducing the cost. For example, Patent Reference 2 describes that the number of the laminated sheets is decreased by the structure, in which a diffusion sheet is removed, and a backcoat film containing particles is provided on one surface of the support. In this structure, the backcoat film containing particles is provided to prevent formation of interference fringes, which are liable to occur due to the removal of the diffusion sheet.

Related Art

Patent References

Patent Reference 1: JP-A-2009-175646
Patent Reference 2: JP-T-2001-524225

Summary of Invention

Technical Problem

However, in the case where an optical laminated film having no diffusion sheet as in Patent Reference 2 is used in a backlight unit of a liquid crystal display device, there is a problem that unevenness in iridescent color (iridescent unevenness) is formed on viewing the prism sheet in an oblique direction. The iridescent unevenness is caused by the wavelength dispersion of refractive index of the resin of the prism sheet, which is different from the interference fringes caused by the difference in refractive index of the laminated film.

It is considered to increase the content of the particles in the backcoat film for suppressing the formation of iridescent unevenness sufficiently. However, the increase of the content of the particles may provide a problem that the haze of the backcoat film is increased to lower the luminance. Accordingly, there has been a problem that both the problem of formation of iridescent unevenness and the problem of lowering the luminance of the backcoat film may not be solved simultaneously.

It is also considered to provide irregularity on the surface of the backcoat film for suppressing the formation of iridescent unevenness. For providing sufficient irregularity on the surface of the backcoat film, the backcoat film has been formed by using a coating solution containing particles of an acrylic resin or the like. However, the backcoat film that is formed by using the coating solution having been used by the ordinary method suffers a problem that the irregularity and the fluctuation thereof on the surface of the backcoat film may be increased to damage the other adjacent sheets and the light guide plate and also to damage the backcoat film itself.

For solving the problems in the related art, the present inventors have made investigation for providing an optical laminated film having a prism sheet that is sufficiently suppressed in the formation of iridescent unevenness and has a high luminance. In addition, the inventors have made investigation for providing a laminated film that is suppressed in the irregularity on the surface of the backcoat film within a prescribed range.

Solution to Problem

As a result of earnest investigations for solving the problems, the inventors have found that in a laminated film having a support and a backcoat film, irregularity (undulation) within a desired range may be imparted to the backcoat film by defining the compositional ratio of the constitutional components of the silicon-containing resin contained in the backcoat film and by defining the volume average particle diameter of the matting agent to a suitable range. According to the constitution, the backcoat film of the invention may prevent iridescent unevenness without decreasing the luminance. Specifically, the invention includes the following aspects.

(1) A laminated film containing a support and a backcoat film on the support, wherein the backcoat film contains a silicon-containing resin, a matting agent and a surfactant, the silicon-containing resin contains a condensate of a silane coupling agent, the silane coupling agent contains a tetrafunctional alkoxysilane and a trifunctional or bifunctional alkoxysilane, a molar ratio of the tetrafunctional alkoxysilane and the trifunctional or bifunctional alkoxysilane is from 25/75 to 85/15, a volume average particle diameter r of the matting agent and an average thickness t of the backcoat film satisfies the relationship $t < r$, and a content of inorganic fine particles in the backcoat film is 20% or less.
(2) The laminated film according to the item (1), wherein the silane coupling agent contains a tetrafunctional alkoxysilane and a trifunctional alkoxysilane, and a molar ratio of the tetrafunctional alkoxysilane and the trifunctional alkoxysilane is from 25/75 to 85/15.
(3) The laminated film according to the item (1) or (2), wherein the trifunctional alkoxysilane is an alkoxysilane having an epoxy group.
(4) The laminated film according to the item (3), wherein the trifunctional alkoxysilane is 3-glycidoxypropyltriethoxysilane.
(5) The laminated film according to any one of the items (1) to (4), wherein the laminated film further contains an intermediate backcoat film between the support and the backcoat film.
(6) The laminated film according to any one of the items (1) to (5), wherein the laminated film has a haze value of from 3 to 30%.
(7) The laminated film according to any one of the items (1) to (6), wherein the backcoat film has a surface that has a ten-point average roughness Rz satisfying the relationship $Rz < 1\ \mu m$.
(8) A method for producing a laminated film, containing coating a coating solution containing a silane coupling agent, a matting agent having a volume average particle diameter r, and a surfactant, on a support, to form a backcoat film having a thickness t, wherein the silane coupling agent contains a tetrafunctional alkoxysilane and a trifunctional or bifunctional alkoxysilane, a molar ratio of the tetrafunctional alkoxysilane and the trifunctional or bifunctional alkoxysilane is from 25/75 to 85/15, the value r and the value t satisfying the relationship $t < r$, and a content of inorganic fine particles in the coating solution is 20% or less.
(9) The method for producing a laminated film according to the item (8), wherein the coating solution contains a condensate of the trifunctional or bifunctional alkoxysilane.
(10) The method for producing a laminated film according to the item (8) or (9), wherein the forming of the backcoat film contains condensing at least a part of a hydrolyzate of the trifunctional or bifunctional alkoxysilane and then condensing a hydrolyzate of the tetrafunctional alkoxysilane.
(11) The method for producing a laminated film according to the item (9) or (10), wherein the coating solution contains the condensate in an amount of from 70 to 99% based on the solid mass except for the matting agent.
(12) A laminated film that is produced by the method according to any one of the items (8) to (11).
(13) An optical laminated film containing a support of the laminated film according to any one of the items (1) to (7) and (12), and on a surface of the support of the laminated film opposite to the surface having the backcoat film laminated thereon, an easily adhesive layer and a prism layer laminated in this order.
(14) A display device containing the optical laminated film according to the item (13).

Advantageous Effects of Invention

According to the invention, an optical laminated film having a prism sheet may be prevented from suffering iridescent unevenness, and a laminated film having a high luminance may be obtained. Accordingly, the laminated film of the invention may be favorably used in a display device, such as a liquid crystal display device.

According to the invention, furthermore, a laminated film having irregularity on the surface of the backcoat film that is controlled within a prescribed range may be obtained. Accordingly, the laminated film of the invention may have irregularity that is necessary to prevent the formation of iridescent unevenness, but the other adjacent sheets and the light guide plate may not be damaged, and the backcoat film itself may not be damaged.

Brief Description of Drawings

[Fig. 1]

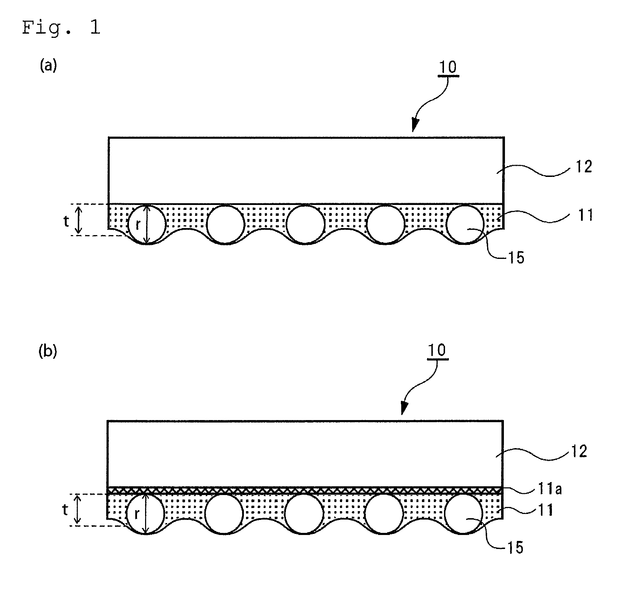

Fig. 1 is cross sectional views showing examples of a laminated film of the invention.
[Fig. 2]

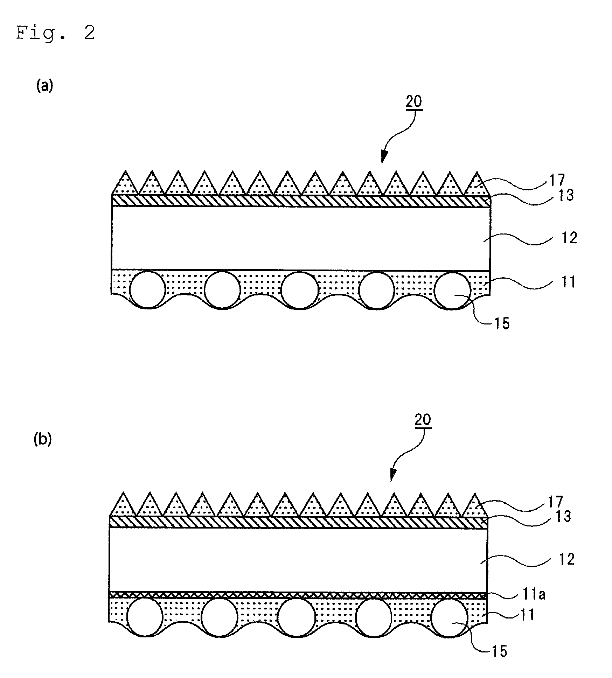

Fig. 2 is cross sectional views showing examples of an optical laminated film having a prism layer of the invention.

Description of Embodiments

The invention will be described in detail below. The descriptions for the constitutional elements shown below may be based on representative embodiments and specific examples, but the invention is not limited to the embodiments. The numerical range herein expressed with numerical values includes the numerical values as the lower limit and the upper limit. The term (meth) acrylate means both acrylate and methacrylate.

Laminated Film

The invention relates to a laminated film. Fig. 1(a) shows an example of the laminated film according to the invention. As shown in Fig. 1(a), the laminated film 10 according to the invention is a laminate of a backcoat film 11 and a support 12. The backcoat film 11 is preferably a hardcoat layer having hardness and scratch resistance. According to the structure, the laminated film 10 may be prevented from being damaged.

The laminated film of the invention is a laminated film that has a support and a backcoat film on the support. The backcoat film contains a silicon-containing resin, a matting agent and a surfactant. The silicon-containing resin contains a condensate of a silane coupling agent condensed. The silane coupling agent contains a tetrafunctional alkoxysilane and a trifunctional or bifunctional alkoxysilane, and the molar ratio of the tetrafunctional alkoxysilane and the trifunctional or bifunctional alkoxysilane is from 25/75 to 85/15. The volume average particle diameter r of the matting agent and an average thickness t of the backcoat film satisfies the relationship t < r. The content of inorganic fine particles in the backcoat film is 20% or less.

The laminated film of the invention may have a haze value that is not excessively large, due to the aforementioned structure. The haze value of the backcoat film may be 35% or less, preferably from 3 to 30%, more preferably from 6 to 30%, and further preferably from 6 to 20%.

In the case where the laminated film of the invention is used in an optical laminated film having a prism sheet, the optical laminated film may be sufficiently suppressed from suffering iridescent unevenness. The backcoat film of the invention has a low haze value, and thus the laminated film and the optical laminated film may be in a state with a high luminance. Accordingly, the laminated film of the invention is favorably used in a display device, such as a liquid crystal display device.

The irregularity on the surface of the laminated film on the side of the backcoat film is in a prescribed range, and thus high scratch resistance may be achieved. Specifically, even though the backcoat film is in contact with the other adjacent sheets, the contact surfaces of the backcoat film itself and the other adjacent sheets may be prevented from being damaged. The backcoat film may not damage the other adjacent sheets and the light guide plate while the backcoat film has irregularity that is necessary to prevent iridescent unevenness.

Backcoat Film

The backcoat film according to the invention contains a silicon-containing resin, a matting agent and a surfactant. The silicon-containing resin contains a condensate of a silane coupling agent condensed, the silane coupling agent contains a tetrafunctional alkoxysilane and a trifunctional or bifunctional alkoxysilane, and the molar ratio of the tetrafunctional alkoxysilane and the trifunctional or bifunctional alkoxysilane is from 25/75 to 85/15. The content of inorganic fine particles in the backcoat film is 20% or less.

Silane Coupling Agent

The material used in the silane coupling agent is preferably a water soluble or water dispersible material. The use of a water soluble or water dispersible material is particularly preferred from the standpoint of reducing environmental pollution due to VOC (volatile organic compounds).

The silane coupling agent contains a tetrafunctional alkoxysilane and a trifunctional or bifunctional alkoxysilane. As for the trifunctional or bifunctional alkoxysilane, either one of the trifunctional and bifunctional alkoxysilanes may be contained, and a mixture of the trifunctional and bifunctional alkoxysilanes may be contained. In the invention, particularly, a trifunctional alkoxysilane is preferably contained, and the molar ratio of the tetrafunctional alkoxysilane and the trifunctional alkoxysilane is preferably from 25/75 to 85/15.

The silane coupling agent has a hydrolyzable group, such as a tetrafunctional alkoxysilane and a trifunctional or bifunctional alkoxysilane. The hydrolyzable group is hydrolyzed in an acidic aqueous solution to form silanol, and silanol molecules are condensed with each other to form an oligomer.

Trifunctional or Bifunctional Alkoxysilane

The trifunctional or bifunctional alkoxysilane may be a trifunctional or bifunctional alkoxysilane that is represented by the following general formula (1):

$$R_{n+1}Si(OR^1)_{3-n} \qquad (1)$$

wherein R represents an organic group having from 1 to 15 carbon atoms that does not contain an amino group; $R^1$ represents an alkyl group having 4 or less carbon atoms, such as a methyl group and an ethyl group; and n represents 0 or 1.

Preferred examples of the trifunctional or bifunctional alkoxysilane represented by the general formula (1) include vinyltrimethoxysilane, 3-methacryloxypropyltrimethoxysilane, 3-acryloxypropyltrimethoxysilane, 3-chloropropyltrimethoxysilane, 3-ureidopropyltrimethoxysilane, propyltrimethoxysilane, phenyltrimethoxysilane, 3-glycidoxypropyltriethoxysilane, 2-(3,4-epoxycyclohexyl)ethyltriethoxysilane, vinyltriethoxysilane, 3-methacryloxypropyltriethoxysilane, 3-acryloxypropyltriethoxysilane, 3-chloropropyltriethoxysilane, 3-ureidopropyltriethoxysilane, propyltriethoxysilane, phenyltriethoxysilane, 3-glycidoxypropylmethyldimethoxysilane, 2-(3,4-epoxycyclohexyl)ethylmethyldimethoxysilane, vinylmethyldimethoxysilane, 3-methacryloxypropylmethyldimethoxysilane, 3-acryloxypropylmethyldimethoxysilane, chloropropylmethyldimethoxysilane, propylmethyldimethoxysilane, phenylmethyldimethoxysilane, 3-glycidoxypropylmethyldiethoxysilane, 2-(3,4-epoxycyclohexyl)ethylmethyldiethoxysilane, vinylmethyldiethoxysilane, 3-methacryloxypropylmethyldiethoxysilane, 3-acryloxypropylmethyldiethoxysilane, chloropropylmethyldiethoxysilane, propylmethyldiethoxysilane, phenylmethyldiethoxysilane, 3-trimethoxysilylpropyl-2-[2-(methoxyethoxy)ethoxy]ethylure thane, 3-triethoxysilylpropyl-2-[2-(methoxyethoxy)ethoxy]ethyuret hane, 3-trimethoxysilylpropyl-2-[2-(methoxypropoxy)propoxy]propyl urethane, 3-triethoxysilylpropyl-2-[2-(methoxypropoxy)propoxy]propylu rethane, 3-glycidoxypropylmethyldimethoxysilane, 3-glycidoxypropylmethyldiethoxysilane, 3-methacryloxypropylmethyldimethoxysilane, 3-methacryloxypropylmethyldiethoxysilane, and 3-mercaptopropylmethyldimethoxysilane.

Among these, the trialkoxysilane, wherein n is 0, is more preferred, examples of which include 3-glycidoxypropyltrimethoxysilane, 3-glycidoxypropyltriethoxysilane, 3-chloropropyltrimethoxysilane, 2-(3,4-epoxycyclohexyl)ethyltrimethoxysilane, 3-ureidopropyltriethoxysilane, 3-trimethoxysilylpropyl-2-[2-(methoxyethoxy)ethoxy]ethylure thane, and 3-trimethoxysilylpropyl-2-[2-(methoxypropoxy)propoxy]propyl urethane.

The trifunctional or bifunctional alkoxysilane represented by the general formula (1) does not contain an amino group as a functional group. That is, the trifunctional or bifunctional alkoxysilane has an organic group R that does not contain an amino group. In the case where the R has an amino group, dehydration condensation among silanols formed on mixing and hydrolysis with the tetrafunctional alkoxysilane may be accelerated. This is not preferred since a coating solution for the backcoat film may be unstable.

R in the general formula (1) may be an organic group having a molecular chain length with the number of carbon atoms in a range of from 1 to 15. When the number of carbon atoms is 15 or less, the backcoat film may not be excessively flexible but may have sufficient hardness. The number of carbon atoms of R is more preferably from 3 to 15, and further preferably from 5 to 13. When the number of carbon atoms of R is in the range, a backcoat film that is further improved in brittleness may be obtained. In the case where an intermediate backcoat film is provided as described later, the adhesiveness between the intermediate backcoat film and the backcoat film may be enhanced.

The organic group represented by R preferably has a hetero atom, such as oxygen, nitrogen and sulfur. When the organic group has a hetero atom, the adhesiveness to the intermediate backcoat film may be further enhanced. In particular, the organic group R preferably has an epoxy group, an amide group, a urethane group, a urea group, an ester group, a hydroxyl group, a carboxyl group and the like. Among these, the trifunctional or bifunctional alkoxysilane that has an epoxy group is particularly preferred since it has an effect of enhancing the stability of silanol in acidic water. The trifunctional or bifunctional alkoxysilane that has an epoxy group may impart sufficient hardness to the backcoat film while imparting suitable flexibility thereof.

In the general formula (1), $R^1$ represents an alkyl group having 4 or less carbon atoms. $R^1$ particularly preferably represents a methyl group or an ethyl group. When $R^1$ is an alkyl group having 4 or less carbon atoms, the trifunctional or bifunctional alkoxysilane may have enhanced hydrophilicity, which may accelerate hydrolysis in an aqueous solution.

In the general formula (1), n represents 0 or 1. When n is 0, the compound represented by the general formula (1) is a trifunctional alkoxysilane, and when n is 1, the compound is a bifunctional alkoxysilane. The trifunctional alkoxysilane and the bifunctional alkoxysilane may be used as a mixture thereof.

Tetrafunctional Alkoxysilane

The use of the tetrafunctional alkoxysilane as a component of the coating solution for the backcoat film may increase the crosslinking density formed through dehydration condensation of silanol formed by hydrolysis of the tetrafunctional alkoxysilane with the trifunctional or bifunctional alkoxysilane represented by the general formula (1). The increase of the crosslinking density may impart sufficient hardness to the backcoat film.

While the tetrafunctional alkoxysilane is not particularly limited, ones having from 1 to 4 carbon atoms are preferred, and tetramethoxysilane and tetraethoxysilane are particularly preferred. When the number of carbon atoms thereof is 4 or less, the hydrolysis rate of the tetrafunctional alkoxysilane may not be too low on mixing with acidic water, and the period of time required to dissolve to form a uniform aqueous solution may be shortened. Accordingly, the production efficiency may be enhanced.

The molar ratio of the tetrafunctional alkoxysilane and the trifunctional or bifunctional alkoxysilane contained in the backcoat film according to the invention may be from 25/75 to 85/15, preferably from 30/70 to 80/20, more preferably from 30/70 to 65/35, and further preferably from 45/55 to 65/35. When the molar ratio of the tetrafunctional alkoxysilane and the trifunctional or bifunctional alkoxysilane contained in the backcoat film is in the range, the polymerization degree of the silane coupling agent may be controlled to a desired range. Accordingly, iridescent unevenness may be prevented from occurring while preventing the haze from being increased.

Matting Agent

Examples of the matting agent include organic resin fine particles and inorganic fine particles. In the invention, the matting agent is defined as particles having a primary particle diameter or a volume average particle diameter of an agglomerate thereof is 500 nm or more. The matting agent is preferably translucent particles.

Examples of the matting agent include silica, calcium carbonate, magnesium carbonate, barium carbonate, aluminum oxide, polystyrene, a polystyrene-divinylbenzene copolymer, polymethyl methacrylate, crosslinked polymethyl methacrylate, a styrene-acrylic copolymer, melamine, and benzoguanamine, and an agglomerate of particles may also be used. At least one kind of particles selected from the group consisting of melamine resin particles, hollow particles, polystyrene resin particles, styrene-acrylic copolymer resin particles, polymethyl methacrylate, crosslinked polymethyl methacrylate, and silicone resin particles may be preferably used, and particles formed of primary particles are preferably used from the standpoint of controlling the surface roughness.

A mixture of two or more kinds of particles having different particle diameters may be used as the matting agent. In particular, when the difference in volume average particle diameter between at least two kinds of particles among two or more kinds of particles is 1 $\mu$m or more, agglomeration of the particles may be reduced. According to the constitution, the particles may be improved in dispersibility, and thereby the appearance of the film surface may be improved.

The matting agent used may contain two or more kinds of particles formed of different kinds of materials simultaneously. For example, by providing a difference in refractive index among the particles, the front luminance and the prevention of iridescent unevenness may be achieved simultaneously, and the appearance of the film surface may be improved.

The volume average particle diameter r of the matting agent is preferably from 0.4 to 3.0 $\mu$m or less, more preferably from 0.7 to 3.0 $\mu$m or less, and further preferably from 1.0 to 3.0 $\mu$m or less.

As shown in Fig. 1, the backcoat film 11 may retain a matting agent 15. The thickness of the backcoat film 11 is preferably determined in relation to the volume average particle diameter r of the matting agent 15, and the thickness is preferably in a range of from 0.4 to 3.0 $\mu$m.

As shown in Fig. 1, the volume average particle diameter r of the matting agent 15 and the average thickness t of the backcoat film 11 satisfies the relationship t < r. The volume average particle diameter r of the matting agent 15 is larger than the average thickness t of the backcoat film 11, and thus the matting agent 15 protrudes to upraise the surface of the backcoat film 11. The protrusion herein may not necessarily mean that the surface of the matting agent is exposed from the surface of the backcoat film, but means that the portion of the backcoat film having the particle has a height (thickness) that is larger than the average thickness. The surface of the matting agent 15 is preferably covered with the backcoat film 11, and the surface of the backcoat film 11 preferably has irregularity along the contour of the diameter of the particles of the matting agent 15. The protruded portion of the surface of the backcoat film 11 is preferably constituted by 5 or more particles, and more preferably 20 or more particles of the matting agent 15 per square millimeter. When the relationship t < r is satisfied to form irregularity on the surface of the backcoat film 11, the optical laminated film may be effectively suppressed from suffering iridescent unevenness.

The volume average particle diameter of the matting agent may be obtained as the equivalent sphere diameter of the equivalent circle average diameter obtained from the average value of the projected areas thereof in the image of the transmission electron microscope (TEM) (obtained for at least 100 particles). The average thickness t of the backcoat film 11 may be obtained in such a manner that a coating solution that is produced without the component of the matting agent is coated and dried to form a simulated film, which is imaged for the cross section thereof with SEM at the number of positions capable of measuring the thickness without fluctuation, and the average value of the thickness values measured at the positions is obtained. In the case where the formulation of the coated film formed without the matting agent is equivalent, the thickness may be conveniently obtained in such a manner that the amount of Si, which is the major component of the coated film, is measured by a fluorescent X-ray analyzer (Axios, produced by Panalytical), and with the SEM thickness and the Si measured values of the simulated film evaluated in advance, the thickness of the actual film containing the matting agent may be calculated in proportion from the Si value thereof measured by the fluorescent X-ray analyzer.

In the invention, furthermore, the volume average particle diameter r of the matting agent and the average thickness t of the backcoat film preferably satisfy the relationship $r/4 \leq t < r$. When the relationship $r/4 \leq t < r$ is satisfied, the drop between the concave part and the convex part of the irregularity formed on the surface of the backcoat film 11 may be suppressed to a certain range. According to the structure, the other adjacent sheets and the light guide plate may be prevented from being damaged while providing the irregularity that is necessary to suppress iridescent unevenness from occurring. Furthermore, the backcoat film itself may be prevented from being damaged due to contact of the backcoat film with the other sheets and the like.

The ten-point average roughness Rz of the backcoat film preferably satisfies the relationship $Rz < 1 \mu m$. The relationship $0.3 \leq Rz \leq 0.9$ is more preferred, and the relationship $0.3 \leq Rz \leq 0.8$ is further preferred. When Rz is in the range, the other adjacent sheets and the light guide plate may be prevented from being damaged, and the backcoat film itself may be prevented from being damaged.

The fluctuation of Rz $\sigma(Rz)$ may be less than 0.1, preferably less than 0.08, and more preferably 0.05 or less. The value $\sigma(Rz)/Rz$ may be less than 0.12, preferably 0.08 or less, and more preferably 0.05 or less. When the values $\sigma(Rz)$ and $\sigma(Rz)/Rz$ are in the ranges, the other adjacent sheets and the light guide plate may be prevented from being damaged, and the backcoat film itself may be prevented from being damaged.

Inorganic Fine Particles

Examples of the inorganic fine particles include metal fine particles having electroconductivity and metal oxide fine particles. Specific examples of the metal include antimony, selenium, titanium, tungsten, tin, zinc, indium, and zirconium, and specific examples of the metal oxide include antimony oxide, selenium oxide, titanium oxide, tungsten oxide, tin oxide, antimony-doped tin oxide (ATO (tin oxide doped with antimony), phosphorus-doped tin oxide, zinc oxide, zinc antimonate, tin-doped indium oxide, and silica. Among these, colloidal silica is preferably used from the standpoint of crosslinking to the silane coupling agent.

The colloidal silica is colloid of silicon dioxide or a hydrate thereof dispersed in water, and the average particle diameter of the colloid particles may be in a range of from 3 to 300 nm. The average particle diameter of the colloid particles is preferably in a range of from 4 to 50 nm, more preferably in a range of from 4 to 40 nm, and particularly preferably in a range of from 5 to 35 nm.

The colloidal silica more preferably has pH adjusted to a range of from 2 to 7 at the time of addition thereof to the coating solution for the backcoat film. When the pH is from 2 to 7, the stability of silanol as a hydrolyzate of the alkoxysilane may be improved, and the increase in viscosity of the coating solution due to fast progress of the dehydration condensation reaction of the silanol may be suppressed more definitely, as compared to the case where the pH is less than 2 or more than 7.

The inorganic fine particles are contained in the backcoat film in an amount of 20% or less based on the solid mass except for the matting agent. The amount of the inorganic fine particles is preferably in a range of 20% or less based on the hydrolyzate of the tetrafunctional alkoxysilane and the trifunctional or bifunctional alkoxysilane of the general formula (1) as 100%. The inorganic fine particles may not be contained in the backcoat film, and the amount thereof may be 0%. The content of the inorganic fine particles may be 20% or less, more preferably 10% or less, and further preferably 5% or less. When the content of the inorganic fine particles is in the range, the irregular shape on the surface at the edge of the matting agent formed on curing the coated film may be spread widely, and thus the irregularity on the surface may be formed with a small amount of the matting agent.

Surfactant

The backcoat film of the invention contains a surfactant. The surfactant used is preferably an anionic surfactant and/or a cationic surfactant.

Examples of the anionic surfactant include a higher fatty acid salt, such as potassium stearate and potassium behenate, an alkyl ether carboxylate salt, such as sodium POE lauryl ether carboxylate, an N-acyl-L-glutamate salt, such as monosodium N-stearoyl-L-glutamate, a higher alkyl sulfate ester salt, such as sodium lauryl sulfate and potassium lauryl sulfate, an alkyl ether sulfate ester salt, such as triethanolamine POE lauryl sulfate and sodium POE lauryl sulfate, an N-acylsarcosinate salt, such as sodium lauroylsarcosinate, a higher fatty acid amidosulfonate salt, such as sodium N-myristoyl-N-methyltaurine, an alkyl phosphate salt, such as sodium stearylphosphate, an alkyl ether phosphate salt, such as sodium POE oleyl ether phosphate and sodium POE stearyl ether phosphate, a sulfosuccinate salt, such as sodium di-2-ethylhexylsulfosuccinate, sodium monolauroylmonoethanolamide polyoxyethylene sulfosuccinate and sodium laurylpolypropylene glycol sulfosuccinate, an alkylbenzenesulfonate salt, such as sodium linear dodecylbenzenesulfonate, triethanolamine linear dodecylbenzenesulfonate, linear dodecylbenzenesulfonic acid and dodecyldiphenyl ether disulfonic acid, and a higher fatty acid ester sulfate ester salt, such as sodium hydrogenated palm oil fatty acid glycerin sulfate.

Examples of the cationic surfactant include an alkyltrimethylammonium salt, such as stearyltrimethylammonium chloride and lauryltrimethylammonium chloride, a dialkyldimethylammonium salt, such as distearyldimethylammonium chloride, an alkylpyridinium salt, such as poly(N,N-dimethyl-3,5-methylenepiperidinium) chloride and cetylpyridinium chloride, an alkyl quaternary ammonium salt, an alkyldimethylbenzylammonium salt, an alkylisoquinolinium salt, a dialkylmorphlinium salt, a POE alkylamine, an alkylamine salt, a polyamine fatty acid derivative, an amyl alcohol fatty acid derivative, benzalkonium chloride, and benzethonium chloride. The use of the surfactant suppresses agglomeration of the particles during the drying process of the coated film, and a uniform surface irregularity may be provided.

Curing Agent

The coating solution for the backcoat film may contain a curing agent, and the curing agent is preferably water soluble. The curing agent may accelerate dehydration condensation of silanol to accelerate formation of a siloxane bond. Examples of the water soluble curing agent include an inorganic acid, an organic acid, an organic acid salt, an inorganic acid salt, a metal alkoxide, and a metal complex, that are water soluble.

Preferred examples of the inorganic acid include boric acid, phosphoric acid, hydrochloric acid, nitric acid, and sulfuric acid. Preferred examples of the organic acid include acetic acid, formic acid, oxalic acid, citric acid, malic acid, and ascorbic acid. Preferred examples of the organic acid salt include aluminum acetate, aluminum oxalate, zinc acetate, zinc oxalate, magnesium acetate, magnesium oxalate, zirconium acetate, and zirconium oxalate. Preferred examples of the inorganic acid salt include aluminum chloride, aluminum sulfate, aluminum nitrate, zinc chloride, zinc sulfate, zinc nitrate, magnesium chloride, magnesium sulfate, magnesium nitrate, zirconium chloride, zirconium sulfate, and zirconium nitrate.

Preferred examples of the metal alkoxide include aluminum alkoxide, titanium alkoxide, and zirconium alkoxide. Preferred examples of the metal complex include aluminum acetylacetonate, aluminum ethyl acetoacetate, titanium acetylacetonate, and titanium ethyl acetoacetate.

Among the curing agents, a compound containing boron, a compound containing phosphorus, and a compound containing aluminum, such as boric acid, phosphoric acid, aluminum alkoxide, and aluminum acetylacetonate, are preferred from the standpoint of the water solubility and the stability in water, and at least one kind thereof may be preferably used as a curing agent.

The curing agent is preferably mixed and dissolved uniformly in the coating solution, and is preferably dissolved in water as a solvent for the coating solution for the backcoat film in the invention from the standpoint of ensuring the transparency of the resin film. This is because in the case where the solubility in water is low, the curing agent may remain in the form of solid in the coating solution and also remain as foreign matters after drying the coated film, and thus a backcoat film having low transparency may be formed in some cases.

The amount of the curing agent is preferably in a range of from 0.1 to 20%, more preferably in a range of from 0.5 to 10%, and particularly preferably in a range of from 0.5 to 8%, based on the total alkoxysilanes including the tetrafunctional alkoxysilane and the trifunctional or bifunctional alkoxysilane represented by the general formula (1) as 100%.

Antistatic Agent

The backcoat film preferably has a surface resistivity of from $10^8$ to $10^{12}$ $\Omega$ per square at 25°C and 40%RH. When the surface resistivity at 25°C and 40%RH is in the range, the optical laminated film may be imparted with an antistatic function, and thereby foreign matters may be prevented from being attached to the surface of the laminated film.

When foreign matters are attached to the surface of the laminated film, the foreign matter may inhibit UV light, which is light used for irradiation for curing for formation of the prism layer, from being transmitted. The inhibition of the transmission of UV light may cause partial failure of curing of the prism layer, which may be defects. In this case, the yield ratio of the laminated film may be deteriorated. Furthermore, the period of time for curing the uniform prism layer of the laminated film may be prolonged, which may deteriorate the production efficiency. Accordingly, the backcoat film preferably has a surface resistivity of from $10^8$ to $10^{12}$ $\Omega$ per square at 25°C and 40%RH, thereby imparting the antistatic function to the laminated film.

For imparting the antistatic function to the laminated film, an ionic antistatic agent, such as cationic, anionic and betaine antistatic agents, is preferably added to the coating solution for the backcoat film. Among these, a betaine compound having an imidazolium skeleton, such as 2-alkyl-N-carboxyethyl-N-hydroxyethylimidazolinium betaine, is preferred. Instead of or in addition to the ionic antistatic agent, fine particles formed of an electroconductive metal oxide, such as tin oxide, indium oxide, zinc oxide, titanium oxide, magnesium oxide and antimony oxide, may be used.

Other Additives

For controlling the surface characteristics, particularly the friction coefficient, of the laminated film, wax may be added to the coating solution for the backcoat film.

Examples of the wax used include paraffin wax, micro wax, polyethylene wax, polyester wax, carnauba wax, a fatty acid, a fatty acid amide, and a metal soap.

Intermediate Backcoat Film

As shown in Fig. 1(b), an intermediate backcoat film 11a may be made to intervene between the backcoat film 11 and the support 12 for fixing the backcoat film 11 to the support 12.

The intermediate backcoat film 11a may be generally formed by coating a coating solution containing a binder, a curing agent and a surfactant on the surface of the support 12. The materials used in the intermediate backcoat film 11a may be materials that are suitably selected for fixing the matting agent 15 to the support 12. Furthermore, a binder having a self-crosslinking function may be used without the use of the curing agent.

The binder used in the intermediate backcoat film is not particularly limited, and from the standpoint of the adhesion force to the support, at least one of polyester, polyurethane, an acrylic resin, and a styrene-butadiene copolymer is preferred. A binder that has water solubility or water dispersibility is particularly preferred from the standpoint of reduction of the environmental load.

The intermediate backcoat film may contain metal oxide particles exhibiting electroconductivity through electron conduction. The metal oxide particles may be an ordinary metal oxide, and examples thereof include $ZnO$, $TiO_2$, $SnO_2$, $Al_2O_3$, $In_2O_3$, $MgO$, $BaO$, $MoO_3$, composite oxides thereof, and metal oxides formed of these oxides containing a small amount of a different element. Among these metal oxides, $SnO_2$, $ZnO$, $TiO_2$, and $In_2O_3$ are preferred, and $SnO_2$ is particularly preferred. Instead of the metal oxide particles exhibiting electroconductivity through electron conduction, an electroconductive polymer having a $\pi$-electron conjugated system, such as a polythiophene polymer, may be contained.

The addition of one of the metal oxide particles exhibiting electroconductivity through electron conduction and the electroconductive polymer having a $\pi$-electron conjugated system to the intermediate backcoat film may control the surface resistivity of the intermediate backcoat film to $10^{12}$ $\Omega$ per square or less. Accordingly, the laminated film may have a sufficient antistatic function, by which dust and dirt may be prevented from being adsorbed thereto.

For controlling the refractive index of the intermediate backcoat film, fine particles formed of a metal oxide may be contained in the intermediate backcoat film. The metal oxide is preferably one having a high refractive index, such as tin oxide, zirconium oxide, zinc oxide, titanium oxide, cerium oxide, and niobium oxide. This is because a metal oxide having a higher refractive index may change the refractive index with a smaller amount thereof. The particle diameter of the fine particles of a metal oxide is preferably in a range of from 1 to 50 nm, and particularly preferably in a range of from 2 to 40 nm. The amount of the fine particles of a metal oxide may be appropriately determined depending on the target refractive index, and the fine particles are contained in the intermediate backcoat film in an amount preferably in a range of from 10 to 90%, and particularly preferably in a range of from 30 to 80%, based on the translucent resin as 100%. The intermediate backcoat film preferably has a refractive index in a range of from 1.4 to 1.8.

The intermediate backcoat film preferably has a thickness of from 0.05 to 0.3 $\mu$m. When the thickness of the intermediate backcoat film is 0.3 $\mu$m or less, interference unevenness caused by the minute changes of the thickness of the backcoat film may be suppressed. When the thickness of the intermediate backcoat film is 0.05 $\mu$m or more, the easily adhesive property may be exhibited. The intermediate backcoat film may retain the matting agent partially.

In the case where the intermediate backcoat film 11a is provided on the backcoat film 11 as shown in Fig. 1(b), the average thickness t is the average thickness of the backcoat film 11. The volume average particle diameter r of the matting agent 15 is larger than the average thickness t of the backcoat film 11.

Support

As shown in Fig. 1(a), the support 12 is laminated on the backcoat film 11. As shown in Fig. 1(b), furthermore, the intermediate backcoat film 11a may be provided between the support 12 and the backcoat film 11. As shown in Figs. 1(a) and 1(b), the interface between the support 12 and the backcoat film 11 or the intermediate backcoat film 11a is flat.

The support may be produced by forming a polymer compound into a film shape by a melt film forming method or a solution film forming method. As the polymer compound used for the support, a transparent compound may be used. Examples of the support include polyethylene terephthalate (PET), polyethylene naphthalate (PEN), polybutylene terephthalate (PBT), polybutylene naphthalate (PBN), a polyarylate compound, a polyether sulfone, polycarbonate, polyether ketone, polysulfone, polyphenylene sulfide, a polyester liquid crystal polymer, triacetyl cellulose, a cellulose derivative, polypropylene, a polyamide compound, polyimide, and a polycycloolefin compound.

Among these, PET, PEN, triacetyl cellulose, and a cellulose derivative are preferred, and PET and PEN are particularly preferred.

The support used is preferably a biaxially stretched polymer film. The biaxially stretched polymer film may be obtained in such a manner that a polymer compound in the form of a long film is stretched in two directions perpendicular to each other, i.e., the longitudinal direction and the transverse direction. In the invention, a film obtained by biaxially stretching a PET or PEN film is particularly preferably used as the support from the standpoint of the elastic modulus and the transparency.

At least of one surface and the other surface of the support is preferably subjected to a corona discharge treatment. The one surface and/or the other surface of the support may be hydrophilized by the corona discharge treatment, thereby having enhanced wettability to various aqueous coating solutions. A functional group, such as a carboxyl group and a hydroxyl group, may be introduced thereto. Accordingly, the adhesion force of one surface of the support to an easily adhesive layer, or the other surface of the support to the backcoat film may be further enhanced.

The support preferably has a thickness of from 50 to 350 $\mu$m. When the thickness is in the range, the laminated film that has a thickness suitable for a constitutional component of a backlight unit may be obtained.

The support preferably has a refractive index of from 1.40 to 1.80 while the value depends on the material used. When the refractive index is in the range, the support may have excellent rigidity as a base material and simultaneously may provide a laminated film excellent in transparency.

Easily Adhesive Layer

As shown in Figs. 2 (a) and 2(b), an easily adhesive layer 13 may be provided between the support 12 and a prism layer 17. The easily adhesive layer 13 may enhance the adhesiveness of the support 12 to the prism layer 17 and may be provided on the surface of the support 12 opposite to the backcoat film 11, for enhancing the adhesion force to the prism layer 17. The easily adhesive layer may be a single layer or may have a laminated structure containing two or more layers.

The easily adhesive layer may be generally formed by coating a coating solution containing a binder, a curing agent and a surfactant on one surface of the support. The materials used in the easily adhesive layer may be preferably materials that are suitably selected for enhancing the adhesion force to the prism layer. The easily adhesive layer may appropriately contain organic or inorganic fine particles.

The binder used in the easily adhesive layer is not particularly limited, and at least one of polyester, polyurethane, an acrylic resin, a styrene-butadiene copolymer, and a polyolefin resin is preferred from the standpoint of the adhesion force. A binder that has water solubility or water dispersibility is particularly preferred from the standpoint of reduction of the environmental load.

The easily adhesive layer may contain metal oxide particles exhibiting electroconductivity through electron conduction. The metal oxide particles may be an ordinary metal oxide, and examples thereof include ZnO, $TiO_2$, $SnO_2$, $Al_2O_3$, $In_2O_3$, MgO, BaO, $MoO_3$, composite oxides thereof, and metal oxides formed of these oxides containing a small amount of a different element. Among these metal oxides, $SnO_2$, ZnO, $TiO_2$, and $In_2O_3$ are preferred, and $SnO_2$ is particularly preferred. Instead of the metal oxide particles exhibiting electroconductivity through electron conduction, an electroconductive polymer having a $\pi$-electron conjugated system, such as a polythiophene polymer, may be contained.

The addition of one of the metal oxide particles exhibiting electroconductivity through electron conduction and the electroconductive polymer having a $\pi$-electron conjugated system to the easily adhesive layer may control the surface resistivity of the easily adhesive layer to $10^{12}$ $\Omega$ per square or less. Accordingly, the optical laminated film may have a sufficient antistatic function, by which dust and dirt may be prevented from being adsorbed thereto.

For controlling the refractive index of the easily adhesive layer, fine particles formed of a metal oxide may be contained in the easily adhesive layer. The metal oxide is preferably one having a high refractive index, such as tin oxide, zirconium oxide, zinc oxide, titanium oxide, cerium oxide, and niobium oxide. This is because a metal oxide having a higher refractive index may change the refractive index with a smaller amount thereof. The particle diameter of the fine particles of a metal oxide is preferably in a range of from 1 to 50 nm, and particularly preferably in a range of from 2 to 40 nm. The amount of the fine particles of a metal oxide may be appropriately determined depending on the target refractive index, and the fine particles are contained in the easily adhesive layer in an amount preferably in a range of from 10 to 90%, and particularly preferably in a range of from 30 to 80%, based on the easily adhesive layer as 100%.

The thickness of the easily adhesive layer may be controlled by adjusting the coated amount of the coating solution for forming the easily adhesive layer. For exhibiting excellent adhesion force with high transparency, the thickness thereof is preferably constant within a range of from 0.01 to 5 $\mu$m. When the thickness is 0.01 $\mu$m or more, the adhesion force may be definitely enhanced as compared to the case where the thickness is less than 0.01 $\mu$m. When the thickness is 5 $\mu$m or less, the easily adhesive layer may be formed with a more uniform thickness as compared to the case where the thickness is larger than 5 $\mu$m. Furthermore, increase in the amount of the coating solution used may be suppressed to prevent the drying time from being prolonged, thereby preventing the cost being increased. The thickness of the easily adhesive layer is more preferably in a range of from 0. 02 to 3 $\mu$m. Two or more layers of the easily adhesive layers may be laminated within the aforementioned range of the thickness.

Lens Layer

The lens layer has a large number of minute prisms disposed thereon for enhancing the luminance on the display surface, and has a function of focusing light from the light guide plate and the diffuser plate. Examples of the lens layer include a microlens layer, a prism layer, and a lenticular lens layer. Among these, a prism layer is particularly preferably used. The lens layer has a large number of minute prisms disposed thereon for enhancing the luminance on the display surface, and focuses light from the light guide plate and the diffuser plate.

Figs. 2(a) and 2(b) show an optical laminated film 20 containing a laminated film having a backcoat film 11, a support 12 and an easily adhesive layer 13 laminated in this order, having further laminated thereon a prism layer 17. The backcoat film 11 of the optical laminated film 20 may have a single layer structure as shown in Fig. 2(a), or may be constituted by two layers, i.e., the backcoat film 11 and an intermediate backcoat film 11a, as shown in Fig. 2(b).

The prism layer is preferably formed by a post-process step on an easily adhesive layer provided on the support. The optical laminated film has a light transmittance in a range of from 70 to 100% for light having a wavelength of 340 nm in the light incident from the side of the backcoat film. Accordingly, the post-process step for providing the prism layer may be shortened as compared to an ordinary process.

There are a case where the prism layer is formed by an embossing method and a case where it is formed by a cast molding polymerization method. A cast molding polymerization method having higher productivity is generally employed.

In the cast molding polymerization method, in general, a film formed of a UV-curable compound capable of being cured with a UV ray (ultraviolet ray) is formed into a prescribed shape, and the compound is cured with a UV ray while retaining the shape, so as to provide plural rows of prisms having a prescribed cross sectional shape as the prism layer. In the case where the prism layer is formed by the cast molding polymerization method, in general, a material containing as a major component a monomer, an oligomer or a polymer having a radical-polymerizable double bond is used, and furthermore a polymerization initiator is added thereto. Examples of the monomer, or oligomer having a radical-polymerizable double bond include an acrylic monomer and an acrylic oligomer. The cast molding polymerization method is preferred rather than the embossing method from the standpoint of the mass productivity, and among the cast molding polymerization methods, a cast molding polymerization method that uses an UV-curable compound is preferred.

In general, a metal halide lamp used for UV curing has a major emission wavelength in a range of from 340 to 400 nm, and a high-pressure mercury lamp has a maj or emission wavelength of 365 nm. As for the light transmittance of the optical laminated film that is required to have transparency in the visible region, there is a tendency that the transmittance is lower at a shorter wavelength within a range of from 340 to 400 nm. Therefore, the light transmittance for at least light of 340 nm is preferably from 70 to 100%. In particular, the light transmittance is preferably from 70 to 100% in overall range of from 340 to 400 nm. When the transmittance for light having a wavelength of 340 nm is 70% or more, a UV ray, which is radiated with a metal halide lamp or a high-pressure mercury lamp on the side of the backcoat film for providing the prism layer through UV curing on one surface of the support, may be prevented from being absorbed in the optical laminated film. Accordingly, the intensity of the UV ray that contributes to curing for providing the prism layer may be prevented from being reduced. As a result, the efficiency of curing the prism layer may be enhanced. When the curing efficiency is lowered, there may be a problem that the curing time required to provide a prescribed cured state may be prolonged, and the productivity of the optical film may be deteriorated. If the curing time is not prolonged, the prism layer may be insufficiently cured, and the prism layer may have insufficient scratch resistance.

The optical laminated films shown in Figs. 2 (a) and 2 (b) each preferably have a light transmittance in a range of from 50 to 100% for light having a wavelength of 365 nm in the light incident from the side of the backcoat film, which may be particularly effective in the case where a high-pressure mercury lamp is used as a light source of light radiated on producing the prism layer. This is because a high-pressure mercury lamp has an emission line at 365 nm.

Optical Laminated Film

The invention relates to a laminated film 10 containing a backcoat film 11 and a support 12. As shown in Figs. 1(a) and 1(b), the support 12 is preferably laminated in contact with the backcoat film 11 or an intermediate backcoat film 11a.

The invention also relates to an optical laminated film 20 having an easily adhesive layer 13, and a prism layer 17 and/or a lens layer, which are further laminated on the laminated film 10.

Display Device

A display device may contain the optical laminated film 20, a liquid crystal panel unit disposed on the side of the prism layer 17 of the optical laminated film 20, a light guide plate disposed on side of the transparent layer 11 of the optical laminated film 20, and the like. Instead of the light guide plate, a direct type backlight or the like may be used. The display device may further contain, in addition to these, such sheets as a prism sheet, a microlens sheet and a reflective sheet. The combination of various sheets and the like may be variously configured depending on the target specification of the display device.

Production Method

The invention relates to a method for producing a laminated film, containing a step of forming a backcoat film having a thickness t by coating a coating solution containing a silane coupling agent, a matting agent having a volume average particle diameter r, and a surfactant, on a support. The silane coupling agent contains a tetrafunctional alkoxysilane and a trifunctional or bifunctional alkoxysilane, and the molar ratio of the tetrafunctional alkoxysilane and the trifunctional or bifunctional alkoxysilane is from 25/75 to 85/15. The value r and the value t satisfy the relationship $t < r$. The content of inorganic fine particles in the coating solution is 20% or less.

The coating solution coated on the support preferably contains a hydrolyzate formed through low molecular weight condensation of the trifunctional or bifunctional alkoxysilane. When the coating solution contains a hydrolyzate formed through low molecular weight condensation of the trifunctional or bifunctional alkoxysilane, the polymerization degree of the silane coupling agent may be controlled to a desired range. Accordingly, iridescent unevenness may be prevented from occurring without increase of the haze.

The polycondensation reaction of the tetrafunctional alkoxysilane and the trifunctional or bifunctional alkoxysilane may be largely suppressed in such a manner that the trifunctional or bifunctional alkoxysilane is hydrolyzed in water under condition of pH of from 2 to 7 with an external temperature controlled to 30°C, and then the tetrafunctional alkoxysilane is hydrolyzed under the same external temperature condition. Furthermore, the resulting reaction liquid is preferably stored at a low temperature. According to the procedures, a long-term storing stability may be imparted to the liquid.

The content of the condensate of the trifunctional or bifunctional alkoxysilane contained in the coating solution is preferably from 70 to 99% based on the solid mass except for the matting agent. When the content of the condensate contained in the coating solution is in the range, the polymerization degree of the silane coupling agent may be controlled more precisely. According to the procedures, sufficient hardness may be imparted to the backcoat film while imparting suitable flexibility thereto. Furthermore, excellent scratch resistance may be obtained.

The step of forming a backcoat film may contain a step of hydrolyzing at least a part of the trifunctional or bifunctional alkoxysilane and then hydrolyzing the tetrafunctional alkoxysilane. At least a part of the trifunctional or bifunctional alkoxysilane is preferably hydrolyzed before hydrolyzing the tetrafunctional alkoxysilane, and at least a part of the hydrolyzate of the trifunctional or bifunctional alkoxysilane is preferably condensed before condensing the hydrolyzate of the tetrafunctional alkoxysilane.

A laminated film that is obtained by the production method described above may have a polymerization degree of the silane coupling agent that is controlled to a desired range, and thus may have a low haze value and a high luminance. Furthermore, an optical laminated film formed therewith may be prevented from suffering iridescent unevenness. The irregularity on the surface of the backcoat film of the laminated film is suppressed in a prescribed range, and thus excellent scratch resistance may be obtained while retaining irregularity that is necessary to suppress generation of iridescent unevenness. The laminated film and the optical laminated film obtained by the production method may be favorably applied to a display device, such as a liquid crystal display panel.

Example

The features of the invention will be described in more detail with reference to examples and comparative examples below. The materials, the amounts thereof used, the proportion thereof, the contents of procedures, the process steps of procedures, and the like shown in the examples below may be appropriately changed unless they deviate from the substance of the invention. Therefore, the scope of the invention is not construed as being limited to the specific examples shown below.

Example 1

Support

A polyethylene terephthalate (hereinafter referred to as PET) resin having an intrinsic viscosity of 0.66 obtained by polycondensation with a Ti compound as a catalyst was dried to a water content of 50 ppm or less and melted in an extruder having a heater temperature set to a temperature of from 280 to 300°C. The molten PET resin was ejected from a die to a chill roll applied with static charge to provide an amorphous base. The resulting amorphous base was stretched in the running direction by 3.1 times and then stretched in the transverse direction by 3.8 times to provide a PET support having a thickness of 250 $\mu$m.

Easily Adhesive Layer

The PET support was subjected to a corona discharge treatment under condition of 730 J/m$^2$, and the following coating solution A was coated on the surface having been subjected to corona treatment by a bar coating method. The coated layer was dried at 145°C for 1 minute to provide a first adhesive layer on one surface of the PET support, and the surface of the first adhesive layer was subjected to a corona discharge treatment under condition of 288 J/m$^2$. The following coating solution B was coated on the first adhesive layer by a bar coating method, and the coated layer was dried at 145°C for 1 minute to provide an easily adhesive layer film having a second adhesive layer formed on the first adhesive layer.

Coating solution A

The coating solution A had the following composition.

| | |
|---|---|
| Acrylate ester copolymer | 63.4 parts by mass |
| (Jurymer ET-410, produced by Toagosei Co. , Ltd., solid content: 30%) | |
| Polyolefin | 95.1 parts by mass |
| (Arrowbase SE-1013N, produced by Unitika Ltd., solid content: 20% by mass) | |
| Crosslinking agent | 31.5 parts by mass |
| (carbodiimide compound, Carbodilite V-02-L2, produced by Nisshinbo Chemical Inc., solid content: 40%) | |
| Surfactant A | 16.7 parts by mass |
| (1% aqueous solution of Naroacty CL-95, produced by Sanyo Chemical Industries, Ltd.) | |
| Surfactant B | 6.9 parts by mass |
| (1% aqueous solution of Rapisol B-90, Corporation) | produced by NOF |
| Polystyrene latex aqueous dispersion 1.2 parts by mass (Nippol UFN1008, produced by Zeon Corporation) | |
| Antiseptic agent | 0.8 part by mass |
| (AF-337, produced by Daito Chemical Co., Ltd., solid content: 3.5% with methanol solvent) | |
| Distilled water | $\alpha$ parts by mass |
| ($\alpha$: the amount making the total coating solution A to 1,000 parts by mass) | |

Coating solution B

The coating solution B had the following composition.

| | |
|---|---|
| Aqueous dispersion of polyester | 77.6 parts by mass |
| (Plas Coat Z592, Goo Chemical Co., Ltd., solid content: 25%) | |
| Polyurethane resin | 51.1 parts by mass |
| (Superflex 150HS, produced by Dai-ichi Kogyo Seiyaku Co., Ltd. , solid content: 38%) | |
| Crosslinking agent (oxazoline compound) | 15.3 parts by mass |
| (Epocros K2020E, produced by Nippon Shokubai Co., Ltd., solid content: 40%) | |

(continued)

| | |
|---|---|
| Surfactant A | 29.7 parts by mass |
| (1% aqueous solution of Naroacty CL-95, produced by Sanyo Chemical Industries, Ltd.) | |
| Surfactant B | 12.3 parts by mass |
| (1% aqueous solution of Rapisol B-90, produced by NOF Corporation) | |
| Lubricant | 1.8 parts by mass |
| (carnauba wax dispersed product, Selosol 524, produced by Chukyo Yushi Co., Ltd., solid content: 30%) | |
| Antiseptic agent | 0.7 part by mass |
| (AF-337, produced by Daito Chemical Co., Ltd., solid content: 3.5% with methanol solvent) | |
| Distilled water | $\alpha$ parts by mass |
| ($\alpha$: the amount making the total coating solution B to 1,000 parts by mass) | |

Intermediate Backcoat Film

After forming the easily adhesive layer on one surface of the support, the other surface of the support was subjected to a corona discharge treatment under condition of 310 J/m$^2$, and the coating solution for an intermediate backcoat film with the following composition was coated thereon by a bar coating method. The coated amount was 8.4 cm$^3$/m$^2$, and the coated layer was dried at 145°C for 1 minute. According to the procedures, an intermediate backcoat film having an average thickness of approximately 0.1 $\mu$m was formed on the surface opposite to the surface having the easily adhesive layer formed thereon.

Coating solution for Intermediate Backcoat Film

| | |
|---|---|
| Self-crosslinking polyurethane resin binder | 31.5 parts by mass |
| (Takelac WS-5100, produced by Mitsui Chemicals, Inc., solid content: 30%) | |
| Aqueous dispersion of acicular tin dioxide-antimony composite metal oxide | 43.7 parts by mass |
| (FS-10D, produced by Ishihara Sangyo Kaisha, Ltd.: solid content: 20%) | |
| Surfactant C | 2.1 parts by mass |
| (10% aqueous solution of Sanded BL, anionic, produced by Sanyo Chemical Industries, Ltd.) | |
| Surfactant B | 21.0 parts by mass |
| (1% aqueous solution of Naroacty CL-95, nonionic, produced by Sanyo Chemical Industries, Ltd.) | |
| Distilled water | $\alpha$ parts by mass |
| ($\alpha$: the amount making the total coating solution B to 1,000 parts by mass) | |

Backcoat Film

Subsequently, a coating solution for a backcoat film having the following composition was coated by a bar coating method on the intermediate backcoat film, which had been subjected to a corona discharge treatment under condition of 200 J/m$^2$ in advance. The coated amount was 13.8 cm$^3$/m$^2$, and the coated layer was dried at 145°C for 1 minute. According to the procedures, a backcoat film having an average thickness of approximately 0.85 $\mu$m was formed.

Coating solution for Backcoat Film

| | |
|---|---|
| Acetic acid aqueous solution | 402.0 parts by mass |
| (1% aqueous solution of acetic acid for industrial use, produced by Daicel Corporation) | |
| 3-Glycidoxypropyltriethoxysilane | 110.0 parts by mass |
| (KBE-403, produced by Shin-Etsu Chemical Co., Ltd.) | |
| Tetraethoxysilane | 127.6 parts by mass |
| (KBE-04, produced by Shin-Etsu Chemical Co., Ltd.) | |
| Curing agent | 1.3 parts by mass |
| (Aluminum Chelate A(W), produced by Kawaken Fine Chemicals Co., Ltd.) | |
| Surfactant C | 14.7 parts by mass |
| (10% aqueous solution of Sanded BL, anionic, produced by Sanyo Chemical Industries, Ltd.) | |
| Surfactant B | 40.9 parts by mass |

(continued)

| | |
|---|---|
| (1% aqueous solution of Naroacty CL-95, nonionic, produced by Sanyo Chemical Industries, Ltd.) | |
| Acrylic resin fine particles | 9.2 parts by mass |
| (MX-150, produced by Soken Chemical & Engineering Co., Ltd., average particle diameter: 1.5 $\mu$m) | |
| Acrylic resin fine particles | 9.2 parts by mass |
| (MX-80H3WT, produced by Soken Chemical & Engineering Co., Ltd. , average particle diameter: 0.8 $\mu$m) | |
| Aqueous dispersion of polystyrene resin fine particles | 6.9 parts by mass |
| (Nippol UFN1008, produced by Zeon Corporation, solid content: 20%, average particle diameter: 1.9 $\mu$m) | |
| Distilled water | $\alpha$ parts by mass |
| ($\alpha$: the amount making the total coating solution B to 1,000 parts by mass) | |

The coating solution for a backcoat film was prepared in the following manner.

While vigorously agitating the acetic acid aqueous solution in a thermostat chamber at 25°C, 3-glycidoxypropyltriethoxysilane was added dropwise to the acetic acid aqueous solution over 3 minutes. After agitating for 1 hour, subsequently, tetraethoxysilane was added to the acetic acid aqueous solution under vigorously agitating over 5 minutes, followed by agitating for 2 hours. The solution was cooled to 10°C over 1 hour. The aqueous solution thus obtained was designated as an aqueous solution X.

The curing agent, the surfactants, the distilled water, and the resin fine particles were mixed and subjected to ultrasonic dispersion for 5 minutes. The particle dispersion thus obtained was designated as an aqueous solution Y. The aqueous solution Y, the surfactant, and the distilled water were added sequentially to the aqueous solution X, followed by cooling to 10°C.

Examples 2 to 14

Optical laminated films of Examples 2 to 14 were produced by coating the coating solution for a backcoat film on the intermediate backcoat film in the same manner as in Example 1 while the compositions of the coating solution for a backcoat film and the coating solution for an intermediate backcoat film were partially changed. The compositions of the coating solutions for a backcoat film of Examples 1 to 14 are shown in Table 1 below.

Table 1

| | Composition of coating solution (unit: part by mass) | Example 1 | Example 2 | Example 3 | Example 4 | Example 5 | Example 6 | Example 7 |
|---|---|---|---|---|---|---|---|---|
| Resin film support | Self-crosslinking polyurethane resin binder | 31.5 | 31.5 | 31.5 | 31.5 | 31.5 | 31.5 | 31.5 |
| | Aqueous dispersion of acicular tin dioxide-antimony composite metal oxide | 43.7 | 43.7 | 43.7 | 43.7 | 43.7 | 43.7 | 43.7 |
| | Surfactant C | 2.1 | 2.1 | 2.1 | 2.1 | 2.1 | 2.1 | 2.1 |
| | Surfactant B | 21.0 | 21.0 | 21.0 | 21.0 | 21.0 | 21.0 | 21.0 |
| | Distilled water | 901.7 | 901.7 | 901.7 | 901.7 | 901.7 | 901.7 | 901.7 |
| Coating solution for backcoat film | Acetic acid aqueous solution | 402.0 | 402.0 | 402.0 | 402.0 | 402.0 | 402.0 | 381.9 |
| | 3-Glycidoxypropyltriethoxysilane | 135.1 | 110.0 | 110.0 | 110.0 | 160.4 | 65.2 | 104.5 |
| | 3-Glycidoxypropylmethyldiethoxysilane | 0.0 | 0.0 | 0.0 | 0.0 | 0.0 | 0.0 | 0.0 |
| | Tetraethoxysilane | 89.6 | 127.6 | 127.6 | 127.6 | 51.4 | 195.3 | 121.3 |
| | Tetramethoxysilane | 0.0 | 0.0 | 0.0 | 0.0 | 0.0 | 0.0 | 0.0 |
| | Colloidal silica | 0.0 | 0.0 | 0.0 | 0.0 | 0.0 | 0.0 | 33.9 |
| | Curing agent | 1.3 | 1.3 | 1.3 | 1.3 | 1.3 | 1.3 | 1.3 |
| | Surfactant C | 14.7 | 14.7 | 14.7 | 14.7 | 14.7 | 14.7 | 14.7 |
| | Surfactant B | 40.9 | 40.9 | 40.9 | 40.9 | 40.9 | 40.9 | 40.9 |
| | Acrylic resin fine particles (average particle diameter: 1.5 μm) | 3.3 | 3.3 | 1.4 | 0.7 | 3.3 | 3.3 | 1.4 |
| | Acrylic resin fine particles (average particle diameter: 0.8 μm) | 0.0 | 0.0 | 1.4 | 0.7 | 0.0 | 0.0 | 1.4 |
| | Aqueous dispersion of polystyrene resin fine particles | 0.0 | 0.0 | 6.9 | 3.5 | 0.0 | 0.0 | 6.9 |
| | Distilled water | 313.1 | 300.2 | 293.8 | 298.7 | 326.0 | 277.3 | 291.9 |

(continued)

Table 1 (continued)

| Composition of coating solution (unit: part by mass) | | Example 8 | Example 9 | Example 10 | Example 11 | Example 12 | Example 13 | Example 14 |
|---|---|---|---|---|---|---|---|---|
| Resin film support | Self-crosslinking polyurethane resin binder | 31.5 | 31.5 | 31.5 | 31.5 | 31.5 | 31.5 | 31.5 |
| | Aqueous dispersion of acicular tin dioxide-antimony composite metal oxide | 43.7 | 43.7 | 43.7 | 43.7 | 43.7 | 43.7 | 43.7 |
| | Surfactant C | 2.1 | 2.1 | 2.1 | 2.1 | 2.1 | 2.1 | 2.1 |
| | Surfactant B | 21.0 | 21.0 | 21.0 | 21.0 | 21.0 | 21.0 | 21 |
| | Distilled water | 901.7 | 901.7 | 901.7 | 901.7 | 901.7 | 901.7 | 901.7 |
| Coating solution for backcoat film | Acetic acid aqueous solution | 402.0 | 337.7 | 402.0 | 402.0 | 402.0 | 402.0 | 409.9 |
| | 3-Glycidoxypropyltriethoxysilane | 110.0 | 92.4 | 48.9 | 110.0 | 0.0 | 135.1 | 112.2 |
| | 3-Glycidoxypropylmethyldiethoxysilane | 0.0 | 0.0 | 0.0 | 0.0 | 121.8 | 0.0 | 0.0 |
| | Tetraethoxysilane | 127.6 | 107.2 | 56.8 | 127.6 | 89.6 | 0.0 | 130.1 |
| | Tetramethoxysilane | 0.0 | 0.0 | 0.0 | 0.0 | 0.0 | 63.3 | 0.0 |
| | Colloidal silica | 0.0 | 108.5 | 0.0 | 0.0 | 0.0 | 0.0 | 0.0 |
| | Curing agent | 1.3 | 1.3 | 1.3 | 1.3 | 1.3 | 1.3 | 0.9 |
| | Surfactant C | 14.7 | 14.7 | 14.7 | 14.7 | 14.7 | 14.7 | 9.8 |
| | Surfactant B | 40.9 | 40.9 | 40.9 | 40.9 | 40.9 | 40.9 | 27.3 |
| | Acrylic resin fine particles (average particle diameter: 1.5 μm) | 4.8 | 1.4 | 0.0 | 7.2 | 3.3 | 3.3 | 6.5 |
| | Acrylic resin fine particles (average particle diameter: 0.8 μm) | 9.7 | 1.4 | 0.2 | 14.5 | 0.0 | 0.0 | 0.0 |
| | Aqueous dispersion of polystyrene resin fine particles | 0.0 | 6.9 | 0.0 | 0.0 | 0.0 | 0.0 | 0.0 |
| | Distilled water | 289.0 | 287.7 | 435.2 | 281.8 | 326.4 | 339.4 | 303.4 |

Comparative Examples 1 to 7 and 11 to 12

Optical laminated films of Comparative Examples 1 to 7 and 11 to 12 were produced by coating the coating solution for a backcoat film on the intermediate backcoat film in the same manner as in Example 1 while the compositions of the coating solution for a backcoat film and the coating solution for an intermediate backcoat film were partially changed. The compositions of the coating solutions for a backcoat film are shown in Table 2 below.

Comparative Example 8 to 10

The support was changed to a PET base (Cosmoshine A4100, produced by Toyobo Co., Ltd.), and after forming the easily adhesive layer having the same composition as in Example 1 on the non-coated surface of the PET base, a coating solution for a backcoat film having the composition shown in Table 2 was coated on the opposite surface, dried under condition of 70°C for 1 minute, and then cured by irradiating with an ultraviolet ray under condition of 1,000 mJ/cm$^2$ from the side of the backcoat film. The light source used for the ultraviolet ray irradiation was a metal halide lamp, UVL-1500M2, produced by Ushio, Inc.

Table 2

| | Composition of coating solution (unit: part by mass) | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Resin film support | Self-crosslinking polyurethane resin binder | 31.5 | 31.5 | 31.5 | 31.5 | 31.5 | 31.5 | 31.5 |
| | Aqueous dispersion of acicular tin dioxide-antimony composite metal oxide | 43.7 | 43.7 | 43.7 | 43.7 | 43.7 | 43.7 | 43.7 |
| | Surfactant C | 2.1 | 2.1 | 2.1 | 2.1 | 2.1 | 2.1 | 2.1 |
| | Surfactant B | 21 | 21 | 21 | 21 | 21 | 21 | 21 |
| | Distilled water | 901.7 | 901.7 | 901.7 | 901.7 | 901.7 | 901.7 | 901.7 |
| Coating solution for backcoat film | Acetic acid aqueous solution | 402 | 402 | 402 | 313.6 | 269.34 | 140.7 | 140.7 |
| | 3-Glycidoxypropyl-triethoxysilane | 194.4 | 0.0 | 110.0 | 85.8 | 73.7 | 38.5 | 38.5 |
| | Tetraethoxysilane | 0.0 | 294.0 | 127.6 | 99.5 | 85.5 | 44.7 | 44.7 |
| | Colloidal silica | 0.0 | 0.0 | 0.0 | 149.2 | 223.8 | 440.8 | 440.8 |
| | Caprolactone-modified dipentaerythritol hexaacrylate | 0.0 | 0.0 | 0.0 | 0.0 | 0.0 | 0.0 | 0.0 |
| | Urethane acrylate | 0.0 | 0.0 | 0.0 | 0.0 | 0.0 | 0.0 | 0.0 |
| | Curing agent | 1.3 | 1.3 | 1.3 | 1.3 | 1.3 | 1.3 | 1.3 |
| | 1-Hydroxycyclohexyl phenyl ketone | 0.0 | 0.0 | 0.0 | 0.0 | 0.0 | 0.0 | 0.0 |
| | Surfactant C | 14.7 | 14.7 | 0.0 | 14.7 | 14.7 | 14.7 | 14.7 |
| | Surfactant B | 40.9 | 40.9 | 0.0 | 40.9 | 40.9 | 40.9 | 40.9 |
| | Acrylic resin fine particles (average particle diameter: 8.0 μm) | 0.0 | 0.0 | 0.0 | 0.0 | 0.0 | 0.0 | 0.0 |
| | Acrylic resin fine particles (average particle diameter: 1.5 μm) | 3.3 | 3.3 | 1.4 | 1.4 | 1.4 | 1.4 | 2.4 |
| | Acrylic resin fine particles (average particle diameter: 0.8 μm) | 0.0 | 0.0 | 1.4 | 1.4 | 1.4 | 1.4 | 2.4 |
| | Aqueous dispersion of polystyrene resin fine particles | 0.0 | 0.0 | 6.9 | 6.9 | 6.9 | 6.9 | 12.1 |
| | MEK | 0.0 | 0.0 | 0.0 | 0.0 | 0.0 | 0.0 | 0.0 |
| | MIBK | 0.0 | 0.0 | 0.0 | 0.0 | 0.0 | 0.0 | 0.0 |
| | Distilled water | 343.4 | 243.8 | 349.4 | 285.4 | 281.1 | 268.8 | 261.6 |

(continued)

EP 2 905 131 A1

Table 2 (continued)

| | Composition of coating solution (unit: part by mass) | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|
| Resin film support | Self-crosslinking polyurethane resin binder | 31.5 | 0.0 | 0.0 | 0.0 | 31.5 | 31.5 | 31.5 |
| | Aqueous dispersion of acicular tin dioxide-antimony composite metal oxide | 43.7 | 0.0 | 0.0 | 0.0 | 43.7 | 43.7 | 43.7 |
| | Surfactant C | 2.1 | 0.0 | 0.0 | 0.0 | 2.1 | 2.1 | 2.1 |
| | Surfactant B | 21 | 0.0 | 0.0 | 0.0 | 21 | 21 | 21 |
| | Distilled water | 901.7 | 0.0 | 0.0 | 0.0 | 901.7 | 901.7 | 901.7 |
| | Acetic acid aqueous solution | 402 | 0.0 | 0.0 | 0.0 | 402 | 402 | 402 |
| | 3-Glycidoxypropyl-triethoxysilane | 110.0 | 0.0 | 0.0 | 0.0 | 110.0 | 110 | 110.0 |
| | Tetraethoxysilane | 127.6 | 0.0 | 0.0 | 0.0 | 127.6 | 127.6 | 127.6 |
| | Colloidal silica | 0.0 | 0.0 | 0.0 | 0.0 | 0.0 | 0.0 | 0.0 |
| | Caprolactone-modified dipentaerythritol hexaacrylate | 0.0 | 500.0 | 500.0 | 500.0 | 0.0 | 0.0 | 0.0 |
| | Urethane acrylate | 0.0 | 0.0 | 0.0 | 0.0 | 0.0 | 0.0 | 0.0 |
| | Curing agent | 1.3 | 5.0 | 5.0 | 5.0 | 1.3 | 0.7 | 1.3 |
| | 1-Hydroxycyclohexyl phenyl ketone | 0.0 | 0.0 | 0.0 | 0.0 | 0.0 | 0.0 | 0.0 |
| | Surfactant C | 14.7 | 0.0 | 0.0 | 0.0 | 14.7 | 7.4 | 14.7 |
| | Surfactant B | 40.9 | 0.0 | 0.0 | 0.0 | 40.9 | 20.5 | 40.9 |
| Coating solution for backcoat film | Acrylic resin fine particles (average particle diameter: 8.0 μm) | 0.0 | 0.8 | 0.0 | 0.0 | 0.0 | 0.0 | 0.0 |
| | Acrylic resin fine particles (average particle diameter: 1.5 μm) | 0.0 | 0.8 | 25.1 | 38.0 | 1.4 | 0.7 | 0.0 |
| | Acrylic resin fine particles (average particle diameter: 0.8 μm) | 0.0 | 0.0 | 0.0 | 0.0 | 0.0 | 0.7 | 29.0 |
| | Aqueous dispersion of polystyrene resin fine particles | 0.0 | 0.0 | 0.0 | 0.0 | 0.0 | 3.5 | 0.0 |
| | MEK | 0.0 | 246.7 | 469.9 | 457.0 | 0.0 | 0.0 | 0.0 |
| | MIBK | 0.0 | 246.7 | 0.0 | 0.0 | 0.0 | 0.0 | 0.0 |
| | Distilled water | 303.5 | 0.0 | 0.0 | 0.0 | 302.1 | 327.1 | 274.5 |

Evaluation

The optical laminated films obtained in Examples 1 to 14 and Comparative Examples 1 to 14 were subjected to the following evaluation.

Haze Value

In the form of the laminated film 10, the haze value thereof was measured with a haze meter (NDH-5000, produced by Nippon Denshoku Industries Co., Ltd.) according to JIS K7105.

In the form of the optical laminated film 20, the haze value may be measured after completely flattening with a liquid having a refractive index that is equivalent to the lens layer (such as a matching oil).

Volume Average Particle Diameter

The diameter Di and the number ni of the particles were measured in a region of 1 cm$^2$ with an optical microscope, and the volume average particle diameter r was calculated by the following expression.

$$r = \Sigma(Di \times Di^3 \times ni) \ / \ \Sigma(Di^3 \times ni)$$

In the case where the measurement with an optical microscope was difficult to perform, the particle diameter was appropriately calculated from images of the surface and the cross section of the film taken with an SEM or the like.

Addition Amount of Translucent Particles

The same measurement was performed as in the measurement of the volume average particle diameter, and with the specific gravity of the particles Ai, the addition amount S was calculated by the following expression.

$$S \ (mg) = 10 \times 4\pi \ / \ 3 \times \Sigma\{Ai \times ni \times (Di \ / \ 2)^3\}$$

Average Thickness of Backcoat Film

Cross sectional images of the film were taken with an SEM at such a number of points that were capable of measuring the thickness without fluctuation, the thickness was measured at the points, and the measured values were averaged.

Ten-point Average Roughness

The 10-point average roughness (Rz) was a measured value obtained by a stylus type surface roughness meter (Handysurf E-35B, produced by Tokyo Seimitsu Co., Ltd.) set according to JIS B0601 (1994).

(1) Evaluation Method for Definition of Transmission Image

The measurement was performed with an image clarity tester (ICM-1DP, produced by Suga Test Instruments Co., Ltd.) according to JIS K7105. The measurement was performed by making light incident on the coated surface of the backcoat film (without the prism layer).

(2) Pencil Hardness

The measurement was performed on the coated surface of the backcoat film according to JIS K5600-5-4.
The evaluation of the iridescent unevenness, the luminance, and the scratch resistance was performed for a prism sheet having a prism layer formed on the easily adhesive layer.

Formation of Prism Layer

The following coating solution for forming a prism layer (hereinafter referred to as a coating solution for a prism layer) was cast in a mold for forming a prism pattern. The coating solution for a prism layer contained a compound capable of being cured with an ultraviolet ray. The film was pressed on the mold with a roller in such a manner that the easily adhesive layer of the film was in contact with the coating solution on the mold, and after 3 seconds from the start of the contact of the coating solution and the easily adhesive layer, the film was irradiated with an ultraviolet ray from the side of the film base under condition of 1,000 mJ/cm$^2$ for curing. The light source used for the ultraviolet ray irradiation was a metal halide lamp, UVL-1500M2, produced by Ushio, Inc. The film was released from the mold, and thus a film having a prism layer having an apex angle of 90°, a pitch of 60 μm and a height of 30 μm, i.e., a prism sheet, was obtained.

Coating solution for Prism Layer

The coating solution for the prism layer had the following composition.

| | |
|---|---|
| Bisphenol A type diacrylate resin | 57.0 parts by mass |
| (NK Ester A-BPE-10, produced by Shin-Nakamura Chemical Co., Ltd.) | |
| Bisphenol A type diacrylate resin | 5.0 parts by mass |
| (NK Ester A-BPE-4, produced by Shin-Nakamura Chemical Co., Ltd.) | |
| Ethoxylated o-phenylphenol acrylate | 35.0 parts by mass |
| (NK Ester A-LEN-10, produced by Shin-Nakamura Chemical Co., Ltd.) | |
| Initiator | 3 parts by mass |
| (Irgacure 184) | |

Iridescent Unevenness

A backlight of a monitor (RL2240H, produced by BenQ Corporation) was taken out in the form capable of being turned on, and each specimen was placed on two diffusion sheets accompanying the monitor with the prism layer directed outward. The degree of color unevenness in the boundary region between the bright portion and the dark portion was visually evaluated on viewing in the direction that was perpendicular to the line in which prisms align in the prism layer and was tilted at approximately 30° from the right above.

A: Completely no color unevenness found
B: Substantially no color unevenness found
C: Slight color unevenness found
D: Color unevenness found
E: Severe color unevenness found

Luminance

With the same arrangement as in the evaluation of iridescent unevenness, the luminance was measured at a field angle of 0.2° from the position that was remote from the backlight surface by 50 cm in the direction perpendicular thereto with reference to accompanying parts configuration, with a spectral radiant luminance meter (SR-3, produced by Topcon Corporation). Thus, the relative luminance of the prism sheet with respect to the luminance of the monitor of the product configuration as 100% was measured.

Scratch Resistance

In a reciprocating abrasion tester (Tribo Gear Type 30, produced by Shinto Scientific Co., Ltd.), the diffusion surface of the diffusion sheet and the surface of the backcoat film were made in contact with each other and rubbed against each other at 100 cm/min for 1 minute with a load of 50 g per 25 mm x 25 mm. The diffusion surface of the diffusion sheet and the surface of the backcoat film were observed after the test, and the level of scratch was evaluated by the following standard.

A: no scratch on diffusion surface or backcoat film surface, with no powder attached
B: scratches on diffusion surface or backcoat film surface in visually unrecognizable level (scratches with length of 50 μm or less), with no powder attached
C: scratches on diffusion surface or backcoat film surface in visually unrecognizable level (scratches with length of 100μ m or less), with no powder attached
D: scratches on diffusion surface or backcoat film surface in visually recognizable level, with no powder attached
E: scratches on diffusion surface or backcoat film surface in visually recognizable level, with powder attached

The results of Examples 1 to 14 and Comparative Examples 1 to 14 are summarized in Table 3.

Table 3

| | (i) | (ii) | (iii) | (iv) | (vi) | | | (vii) |
|---|---|---|---|---|---|---|---|---|
| | Molar ratio of tetrafunctional/ tri(bi)functional | Anionic or cationic surfactant | Content of inorganic fine particles (solid content except for matting agent) | Aqueous or solvent system | Rz | $\sigma$(Rz) | $\sigma$(Rz)/ Rz | Total amount of matting agent added |
| Unit | | | % | | $\mu$m | $\mu$m | | mg/m$^2$ |
| Example 1 | 47/53 | used | 0 | water | 0.78 | 0.05 | 0.06 | 45 |
| Example 2 | 61/39 | used | 0 | water | 0.76 | 0.04 | 0.05 | 45 |
| Example 3 | 61/39 | used | 0 | water | 0.67 | 0.02 | 0.03 | 55 |
| Example 4 | 61/39 | used | 0 | water | 0.66 | 0.03 | 0.05 | 10 |
| Example 5 | 30/70 | used | 0 | water | 0.7 | 0.08 | 0.11 | 45 |
| Example 6 | 80/20 | used | 0 | water | 0.92 | 0.05 | 0.05 | 45 |
| Example 7 | 61/39 | used | 5 | water | 0.7 | 0.03 | 0.04 | 55 |
| Example 8 | 61/39 | used | 0 | water | 0.7 | 0.04 | 0.06 | 200 |
| Example 9 | 61/39 | used | 16 | water | 0.7 | 0.03 | 0.04 | 55 |
| Example 10 | 61/39 | used | 0 | water | 0.4 | 0.03 | 0.08 | 3 |
| Example 11 | 61/39 | used | 0 | water | 0.7 | 0.02 | 0.03 | 300 |
| Example 12 | 47/53 | used | 0 | water | 0.72 | 0.04 | 0.06 | 45 |
| Example 13 | 52/48 | used | 0 | water | 0.75 | 0.03 | 0.04 | 45 |
| Example 14 | 61/39 | used | 0 | water | 0.59 | 0.03 | 0.05 | 60 |
| Comparative Example 1 | 0/100 | used | 0 | water | – | – | – | 45 |
| Comparative Example 2 | 100/0 | used | 0 | water | 0.84 | 0.04 | 0.05 | 45 |
| Comparative Example 3 | 61/39 | none | 0 | water | 0.5 | 0.03 | 0.06 | 55 |
| Comparative Example 4 | 61/39 | used | 22 | water | 0.6 | 0.03 | 0.05 | 55 |
| Comparative Example 5 | 61/39 | used | 33 | water | 0.6 | 0.03 | 0.05 | 55 |
| Comparative Example 6 | 61/39 | used | 65 | water | 0.6 | 0.03 | 0.05 | 55 |
| Comparative Example 7 | 61/39 | used | 65 | water | 0.9 | 0.04 | 0.04 | 100 |
| Comparative Example 8 | 61/39 | used | 0 | water | 0.18 | 0.01 | 0.06 | 0 |
| Comparative Example 9 | – | – | 0 | solvent | 1.7 | 0.5 | 0.29 | 10 |
| Comparative Example 10 | – | – | 0 | solvent | 1.2 | 0.3 | 0.25 | 45 |
| Comparative Example 11 | – | – | 0 | solvent | 1.4 | 0.15 | 0.11 | 70 |
| Comparative Example 12 | 61/39 | used | 0 | water | 0.21 | 0.01 | 0.05 | 45 |
| Comparative Example 13 | 61/39 | used | 0 | water | 0.28 | 0.01 | 0.04 | 55 |
| Comparative Example 14 | 61/39 | used | 0 | water | 0.7 | 0.01 | 0.01 | 400 |

(continued)

Table 3 (continued)

| Unit | Average particle diameter of matting agent (μm) (ix) | Thickness of resin film coated (μm) (ix) | 0.5 mm transmission image definition (%) | Difference in transmission image definition between 2 mm and 0.125 mm (%) (x) | Haze value (%) | Pencil hardness (vii) | Iridescent unevenness | BLU luminance ratio with respect to standard (%) | Scratch resistance (abrasion resistance) |
|---|---|---|---|---|---|---|---|---|---|
| Example 1 | 1.5 | 0.85 | 32 | 20 | 11 | H | A | 100% | A |
| Example 2 | 1.5 | 0.85 | 36 | 18 | 10 | H | A | 101% | A |
| Example 3 | 1.4 | 0.85 | 31 | 17 | 12 | H | A | 100% | A |
| Example 4 | 1.4 | 0.85 | 45 | 16 | 6 | H | B | 102% | A |
| Example 5 | 1.5 | 0.85 | 31 | 24 | 12 | F | B | 100% | B |
| Example 6 | 1.5 | 0.85 | 25 | 10 | 13 | 2H | B | 99% | C |
| Example 7 | 1.4 | 0.85 | 33 | 12 | 13 | H | B | 100% | A |
| Example 8 | 1.0 | 0.85 | 11 | 7 | 20 | H | A | 98% | B |
| Example 9 | 1.4 | 0.5 | 50 | 7 | 14 | H | C | 99% | B |
| Example 10 | 0.8 | 0.85 | 66 | 18 | 3 | F | C | 101% | B |
| Example 11 | 1.0 | 0.85 | 4 | 5 | 30 | F | A | 96% | B |
| Example 12 | 1.5 | 0.85 | 34 | 18 | 12 | H | A | 100% | B |
| Example 13 | 1.5 | 0.85 | 37 | 19 | 12 | H | A | 100% | A |
| Example 14 | 1.5 | 1.3 | 48 | 24 | 24 | 2H | C | 100% | A |
| Comparative Example 1 | 1.5 | 0.85 | - | - | - | - | - | - | - |
| Comparative Example 2 | 1.5 | 0.85 | 75 | 3 | 21 | 2H | C | 96% | D |
| Comparative Example 3 | 1.4 | 0.85 | 78 | 5 | 14 | H | D | 100% | A |
| Comparative Example 4 | 1.4 | 0.85 | 71 | 4 | 15 | H | D | 98% | B |
| Comparative Example 5 | 1.4 | 0.85 | 75 | 2 | 16 | H | D | 98% | B |
| Comparative Example 6 | 1.4 | 0.85 | 94 | 1 | 13 | 2H | D | 100% | B |
| Comparative Example 7 | 1.4 | 0.85 | 84 | 5 | 29 | H | B | 92% | B |
| Comparative Example 8 | - | 3 | 91 | 2 | 1 | H | E | 101% | C |
| Comparative Example 9 | 5 | 0.85 | 12 | 81 | 4 | H | D | 100% | D |
| Comparative Example 10 | 1.5 | 0.85 | 20 | 55 | 11 | H | B | 100% | D |
| Comparative Example 11 | 1.5 | 2 | 20 | 55 | 19 | H | A | 97% | D |
| Comparative Example 12 | 1.5 | 1.7 | 90 | 2 | 1 | H | E | 101% | D |
| Comparative Example 13 | 1.4 | 0.85 | 93 | 2 | 4 | 2H | E | 101% | B |
| Comparative Example 14 | 1.0 | 0.85 | 1 | 3 | 40 | F | A | 90% | B |

In Examples 1 to 14, the molar ratio of the tetrafunctional alkoxysilane and the trifunctional or bifunctional alkoxysilane satisfies the range of from 25/75 to 85/15, and the volume average particle diameter r of the matting agent is larger than the average thickness t of the backcoat film. The content of the inorganic particles is 20% or less based on the solid mass except for the matting agent. In Examples 1 to 14, the laminated backcoat films have Rz of less than 1 and $\sigma(Rz)$ of less than 0.1. In Examples 1 to 14, the backcoat films have a luminance of 96% or more, which means a high luminance. Furthermore, the laminated films suffer no occurrence of iridescent unevenness and have excellent scratch resistance.

In Examples 1 to 4, particularly, the laminated films are good in the iridescent unevenness prevention and the luminance and is considerably good in the scratch resistance.

In Comparative Examples 1 and 2, on the other hand, the molar ratio of the tetrafunctional alkoxysilane and the trifunctional or bifunctional alkoxysilane does not satisfy the range of from 25/75 to 85/15. In Comparative Example 1, no tetrafunctional alkoxysilane is contained. Accordingly, no film is formed, and a backcoat film is not formed on the support. In Comparative Example 2, no trifunctional or bifunctional alkoxysilane is obtained. In this case, the polycondensation reactivity of the silane coupling agent is too high, and it is difficult to form the tilted surfaces required to prevent iridescent unevenness.

In Comparative Example 3, iridescent unevenness occurs since no surfactant is contained.

In Comparative Examples 4 to 7, the content of the inorganic particles is 20% or more based on the solid mass except for the matting agent. Accordingly, iridescent unevenness occurs, and the luminance is also lowered in Comparative Example 6.

In Comparative Example 8, no matting agent is contained, and iridescent unevenness is not prevented at all.

In Comparative Examples 9 to 11, an ordinary backcoat film layer formed by the solvent system is formed, and Rz is larger than 1. In Comparative Example 8, iridescent unevenness occurs, and the scratch resistance is poor. In Comparative Examples 9 and 10, the scratch resistance is poor although iridescent unevenness is suppressed.

In Comparative Examples 12 and 13, the volume average particle diameter r of the matting agent is smaller than the average thickness t of the backcoat film, and thus iridescent unevenness is not prevented at all.

In Comparative Example 14, the amount of the matting agent added is large, and the luminance is considerably lowered.

In summary, it is understood that laminated films having a high luminance are obtained in Examples 1 to 14 as compared to Comparative Examples 1 to 14. It is understood that the laminated films obtained in Examples 1 to 14 are suppressed in occurrence of iridescent unevenness. This is because Examples 1 to 14 satisfy the constitution of the invention and thus have irregularity that is required to suppress generation of iridescent unevenness, while controlling Rz of the backcoat film to the prescribed range.

In Examples 1 to 14, the molar ratio of the tetrafunctional alkoxysilane and the trifunctional or bifunctional alkoxysilane satisfies the range of from 25/75 to 85/15, and thus the coating solution of the backcoat film is fixed in a smoothly tilted state along the irregularity of the matting agent in the drying process thereof. This phenomenon may occur since the component forming the backcoat film layer has a molecular weight that is relatively close to that of the solvent component, and thus migrates within the undried film until immediately before the formation of the film where the film is completely dried. In the invention, accordingly, the tilted surfaces of the irregularity on the surface may be smoothened without increasing the amount of the matting agent added, and thus both the high luminance and the prevention of iridescent unevenness may be achieved simultaneously.

In Examples 1 to 14, furthermore, the irregularity on the surface is controlled to the prescribed range, and the tilted surfaces of the irregularity are smooth. Accordingly, the backcoat film itself may be prevented from being damaged in contact with the other adjacent sheets, while maintaining the irregularity that is required to prevent iridescent unevenness from occurring.

Industrial Applicability

According to the invention, a laminated film that suppresses generation of iridescent unevenness and suppresses decrease of the luminance is obtained. According to the invention, furthermore, a laminated film, in which the irregularity on the surface of the backcoat film is controlled to the prescribed range, is obtained. Therefore, the laminated film according to the invention may be favorably used in a display device, such as a liquid crystal display device. The laminated film and the optical laminated film of the invention may also be applied to electric decoration, such as an electrically decorated signboard and a recording material for electric decoration, and thus have high industrial applicability.

Reference Sign List

    10      laminated film
    11      backcoat film
    11a     intermediate backcoat film
    12      support
    13      easily adhesive layer
    15      matting agent

17    prism layer
20    optical laminated film

**Claims**

1.  A laminated film containing a support and a backcoat film on the support, wherein:

    the backcoat film contains a silicon-containing resin, a matting agent and a surfactant,
    the silicon-containing resin contains a condensate of a silane coupling agent,
    the silane coupling agent contains a tetrafunctional alkoxysilane and a trifunctional or bifunctional alkoxysilane,
    a molar ratio of the tetrafunctional alkoxysilane and the trifunctional or bifunctional alkoxysilane is from 25/75 to 85/15,
    a volume average particle diameter r of the matting agent and an average thickness t of the backcoat film satisfies the relationship t < r, and
    a content of inorganic fine particles in the backcoat film is 20% or less.

2.  The laminated film according to Claim 1, wherein the silane coupling agent contains a tetrafunctional alkoxysilane and a trifunctional alkoxysilane, and a molar ratio of the tetrafunctional alkoxysilane and the trifunctional alkoxysilane is from 25/75 to 85/15.

3.  The laminated film according to Claim 1 or 2, wherein the trifunctional alkoxysilane is an alkoxysilane having an epoxy group.

4.  The laminated film according to Claim 3, wherein the trifunctional alkoxysilane is 3-glycidoxypropyltriethoxysilane.

5.  The laminated film according to any one of Claims 1 to 4, wherein the laminated film further contains an intermediate backcoat film between the support and the backcoat film.

6.  The laminated film according to any one of Claims 1 to 5, wherein the laminated film has a haze value of from 3 to 30%.

7.  The laminated film according to any one of Claims 1 to 6, wherein the backcoat film has a surface that has a ten-point average roughness Rz satisfying the relationship Rz < 1 μm.

8.  A method for producing a laminated film, containing coating a coating solution containing a silane coupling agent, a matting agent having a volume average particle diameter r, and a surfactant, on a support, to form a backcoat film having a thickness t, wherein:

    the silane coupling agent contains a tetrafunctional alkoxysilane and a trifunctional or bifunctional alkoxysilane,
    a molar ratio of the tetrafunctional alkoxysilane and the trifunctional or bifunctional alkoxysilane is from 25/75 to 85/15,
    the value r and the value t satisfying the relationship t < r, and
    a content of inorganic fine particles in the coating solution is 20% or less.

9.  The method for producing a laminated film according to Claim 8, wherein the coating solution contains a condensate of the trifunctional or bifunctional alkoxysilane.

10. The method for producing a laminated film according to Claim 8 or 9, wherein the forming of the backcoat film contains condensing at least a part of a hydrolyzate of the trifunctional or bifunctional alkoxysilane and then condensing a hydrolyzate of the tetrafunctional alkoxysilane.

11. The method for producing a laminated film according to Claim 9 or 10, wherein the coating solution contains the condensate in an amount of from 70 to 99% based on the solid mass except for the matting agent.

12. A laminated film that is produced by the method according to any one of Claims 8 to 11.

13. An optical laminated film containing a support of the laminated film according to any one of Claim 1 to 7 and 12, and on a surface of the support of the laminated film opposite to the surface having the backcoat film laminated thereon, an easily adhesive layer and a prism layer laminated in this order.

14. A display device containing the optical laminated film according to Claim 13.

Fig. 1

(a)

(b)

Fig. 2

(a)

(b)

## INTERNATIONAL SEARCH REPORT

| | International application No. |
|---|---|
| | PCT/JP2013/076185 |

A. CLASSIFICATION OF SUBJECT MATTER
*B32B27/00*(2006.01)i, *G02F1/1335*(2006.01)i

According to International Patent Classification (IPC) or to both national classification and IPC

B. FIELDS SEARCHED

Minimum documentation searched (classification system followed by classification symbols)
B32B1/00-43/00, G02B5/00-5/136, G02F1/1335

Documentation searched other than minimum documentation to the extent that such documents are included in the fields searched
　　Jitsuyo Shinan Koho　　　　　1922-1996　Jitsuyo Shinan Toroku Koho　1996-2013
　　Kokai Jitsuyo Shinan Koho　　1971-2013　Toroku Jitsuyo Shinan Koho　1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | US 2012/0213967 A1 (Hidemasa HOSODA), 23 August 2012 (23.08.2012), claims; paragraphs [0002], [0010], [0030], [0074], [0078], [0085], [0095] to [0105], [0147]; examples & US 2012/0213968 A1　& JP 2012-185214 A & JP 2012-189978 A　　& JP 2012-208435 A & CN 102650704 A　　　& CN 102650705 A | 1-14 |
| X | JP 2011-123270 A (Fujifilm Corp.), 23 June 2011 (23.06.2011), claims; paragraphs [0052], [0055], [0062], [0075] to [0082], [0104]; example 6 & KR 2011-0066104 A | 1-14 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 10 December, 2013 (10.12.13) | 24 December, 2013 (24.12.13) |

| Name and mailing address of the ISA/<br>　　Japanese Patent Office | Authorized officer |
|---|---|
| Facsimile No. | Telephone No. |

Form PCT/ISA/210 (second sheet) (July 2009)

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009175646 A

- JP 2001524225 T